# EUROPEAN PATENT SPECIFICATION

(11) **EP 3 882 588 B1**
(45) Date of publication and mention of the grant of the patent: **11.01.2023**
(21) Application number: 21160283.4
(22) Date of filing: 02.03.2021
(51) Int. Cl.: G01G 19/393

(54) **COMBINATION WEIGHING APPARATUS**
KOMBINATIONSWÄGEVORRICHTUNG
APPAREIL DE PESÉE PAR COMBINAISON

(30) Priority: 19.03.2020 JP 2020048639
(43) Date of publication of application: 22.09.2021
(73) Proprietor: Ishida Co., Ltd., Kyoto 606-8392 (JP)
(72) Inventor: KISHIKAWA, Mikio, Ritto-shi, Shiga 520-3026 (JP); OBAYASHI, Yujiro, Ritto-shi, Shiga 520-3026 (JP)
(74) Representative: Gill Jennings & Every LLP

(56) References cited:
- EP-A1- 3 517 905
- JP-A- S61 269 025

## Description

### Technical Field

The present invention relates to a combination weighing apparatus.

### Background Art

A combination weighing apparatus including at least a first channel and a second channel each for processing of articles has been known (e.g., refer to Patent Literature 1). The first channel and the second channel each include: a plurality of hoppers; a control unit that acquires the weight values of respective articles received by the plurality of hoppers and selects a combination of hoppers from the plurality of hoppers such that the total weight of the articles weighed is a predetermined weight; and a discharge chute that discharges the articles discharged from the selected hoppers, downstream by sliding. The discharge chute in each of the first channel and the second channel has a chute outlet through which a slid article is discharged. Because the combination weighing apparatus including at least the first channel and the second channel each for processing of articles has the plurality of chute outlets, installation of two packaging apparatuses enables production of different types of items with the single combination weighing apparatus.

Each discharge chute has a slide face coming closer to the center in the width direction of the combination weighing apparatus as downward in the vertical direction. This configuration makes the difference between selected hoppers in the path on which an article slides down small, so that the time required for the articles discharged from the selected hoppers to gather can be shortened.

Patent Literature 2 and Patent Literature 3 disclose other examples of combination weighing apparatuses.

### Citation List

### Patent Literature

Patent Literature 1: WO 2006/073087 A
Patent Literature 2: JP S61 269025 A
Patent Literature 3: EP 3 517 905 A1

### Summary of Invention

### Technical Problem

Because each discharge chute has the slide face coming closer to the center in the width direction of the combination weighing apparatus as downward in the vertical direction, the plurality of chute outlets is disposed near the center of the combination weighing apparatus. Thus, in some cases, it is difficult to install two packaging apparatuses to the single combination weighing apparatus because the plurality of packaging apparatuses is obstructive to each other.

Therefore, an object of the present invention is to provide a combination weighing apparatus including at least a first channel and a second channel each for processing of articles, the combination weighing apparatus enabling easy installation of two packaging apparatuses.

### Solution to Problem

The invention is a combination weighing apparatus according to claim 1 that includes at least a first channel and a second channel each for processing of articles. The first channel and the second channel each include: a plurality of hoppers that temporarily receives the articles and discharges the articles received, downstream; a control unit that acquires a weight value of the article received by each of the plurality of hoppers and selects a combination of hoppers from the plurality of hoppers such that a total weight of the articles weighed is a predetermined weight; a discharge chute that discharges the articles discharged from the selected hoppers, downstream by sliding; and a timing hopper that temporarily receives the articles discharged from the discharge chute and discharges the article received, downstream. The discharge chute has: a slide face sloping toward a center in a horizontal direction of the combination weighing apparatus as downward in a vertical direction; and a chute outlet through which the articles are discharged. The timing hopper has an outlet through which the articles are discharged. A distance in the horizontal direction between a center of the outlet in the first channel and a center of the outlet in the second channel is longer than a distance in the horizontal direction between a center of the chute outlet in the first channel and a center of the chute outlet in the second channel.

### Brief Description of Drawings

Fig. 1 is a side view of a combination weighing apparatus according to an embodiment.
Fig. 2 is a side view of a schematic configuration of a first channel and a second channel in the combination weighing apparatus.
Fig. 3 is a side view of a schematic configuration of the first channel and a third channel in the combination weighing apparatus.
Fig. 4 is a block diagram of the combination weighing apparatus.
Fig. 5 is a perspective view of discharge chutes and timing hoppers.
Fig. 6 is a side view of a schematic configuration of the discharge chutes and the timing hoppers.

### Description of Embodiments

A combination weighing apparatus according to an embodiment will be described with reference to the drawings. In the following drawings, the same or similar parts are denoted with the same or similar reference signs. The ratio between each dimension in the drawings is not necessarily in agreement with that in the description. The following embodiment is a specific example of the present invention, and thus the technical scope of the present invention is not limited to the embodiment.

### (1) Entire Configuration

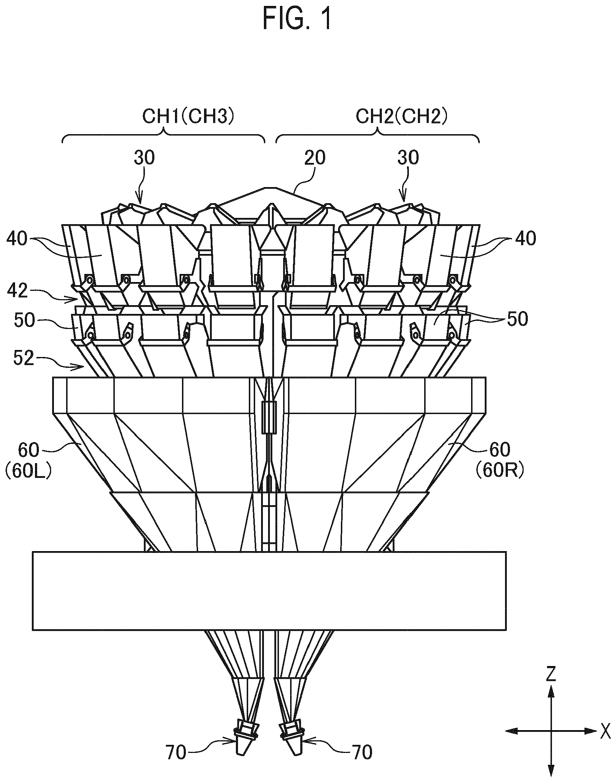

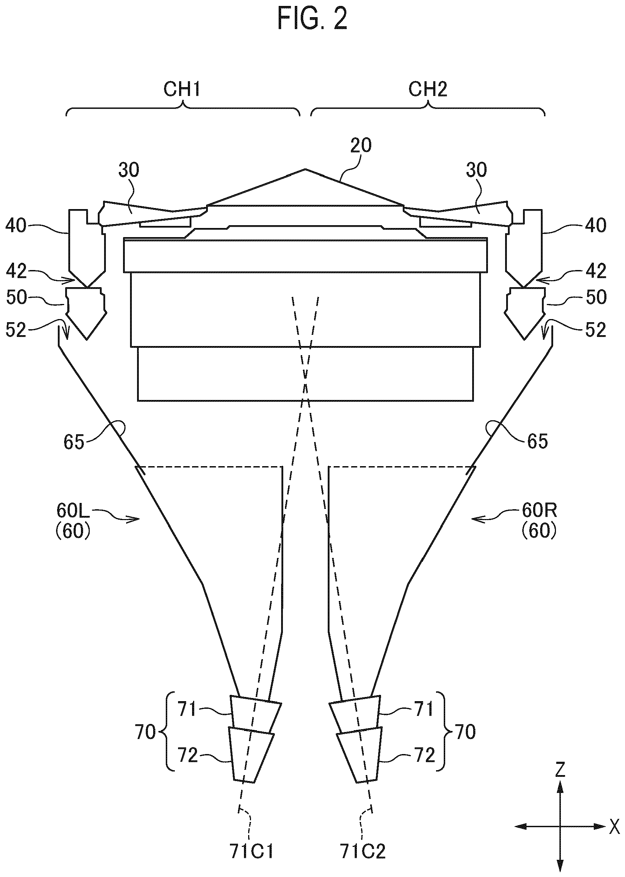

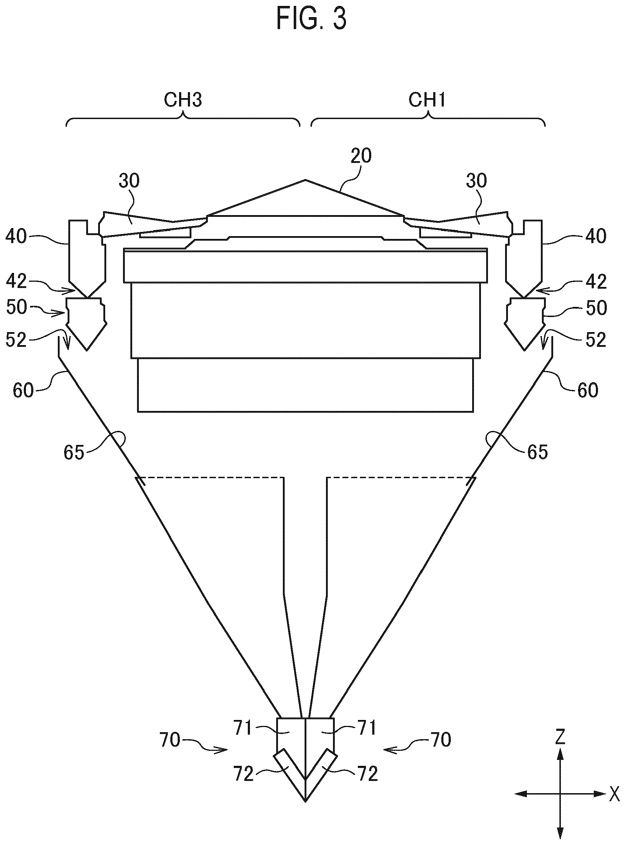

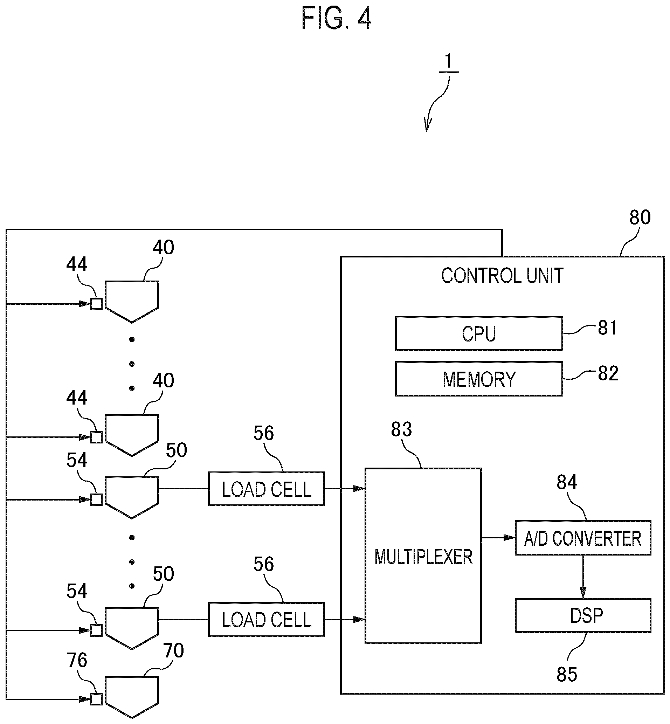

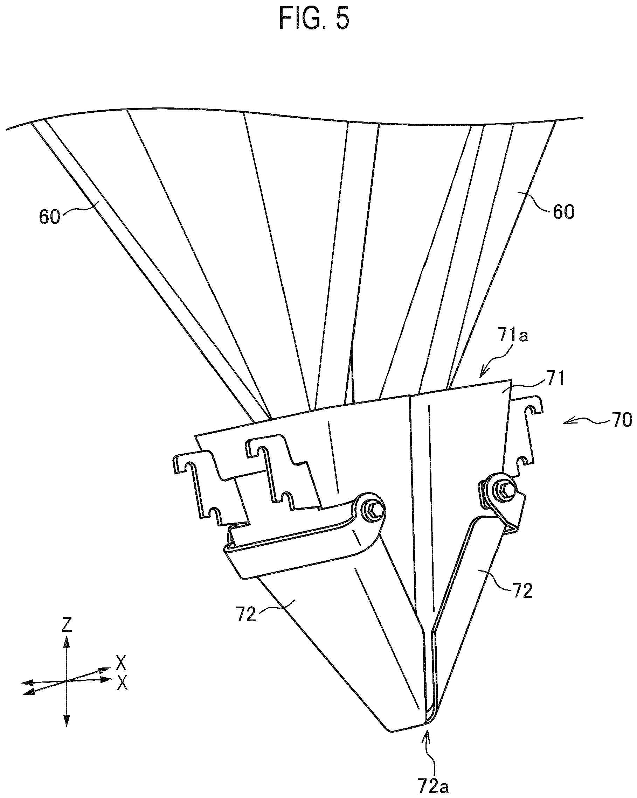

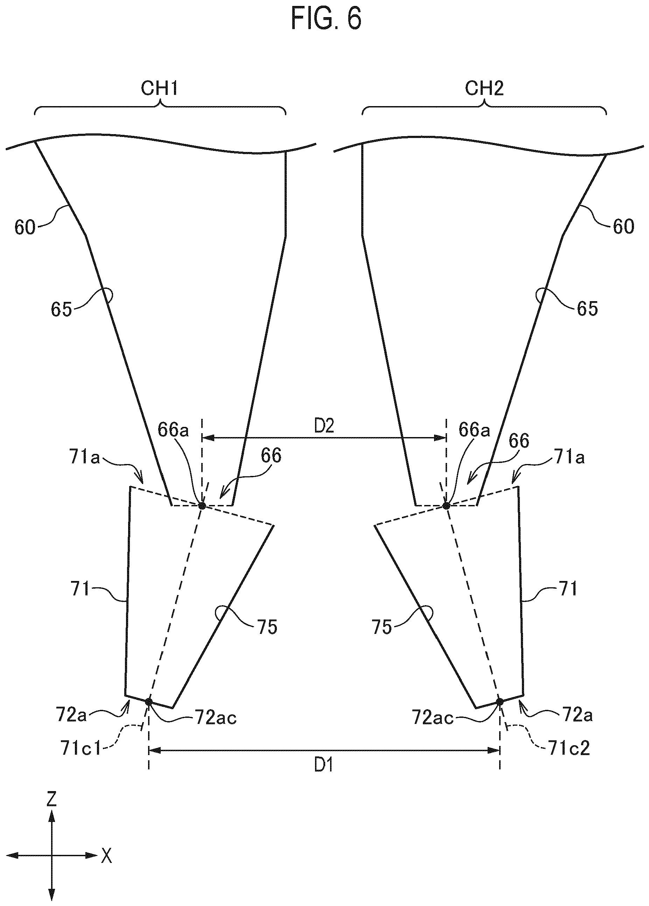

The entire configuration of a combination weighing apparatus 1 will be described with reference to Figs. 1 to 6. Fig. 1 is a side view of the combination weighing apparatus according to the embodiment. Fig. 2 is a side view of a schematic configuration of a first channel and a second channel in the combination weighing apparatus. Fig. 3 is a side view of a schematic configuration of the first channel and a third channel in the combination weighing apparatus. Fig. 4 is a block diagram of the combination weighing apparatus. Fig. 5 is a perspective view of discharge chutes and timing hoppers. Fig. 6 is a side view of a schematic configuration of the discharge chutes and the timing hoppers.

In the combination weighing apparatus 1, processing of articles is performed in a plurality of channels with a distribution table 20, to be described later, divided in a plurality of regions, for example, by partitions. The combination weighing apparatus 1 includes at least a first channel CH1 and a second channel CH2 each for processing of articles. According to the embodiment, provided are four channels of the first channel CH1, the second channel CH2, a third channel CH3, and a fourth channel CH4. Each channel includes the distribution table 20, a plurality of radial feeders 30, a plurality of pool hoppers 40, a plurality of weighing hoppers 50, a discharge chute 60, a timing hopper 70, and a control unit 80.

The combination weighing apparatus 1 having the above configuration functions as follows. Articles as targets to be weighed in the combination weighing apparatus 1 are conveyed to the combination weighing apparatus 1 by a cross feeder. Each article is, for example, a food. The articles conveyed by the cross feeder are put into an article supply chute. The articles put in the article supply chute are supplied to the distribution table 20. The distribution table 20 conveys the articles in a distributing manner, and supplies the articles to the plurality of radial feeders 30 disposed around the distribution table 20. The radial feeders 30 each convey the article supplied from the distribution table 20 to the pool hopper 40 provided corresponding to the radial feeder 30, to supply the pool hopper 40 with the article.

Each pool hopper 40 supplies the article to the weighing hopper 50 disposed below the pool hopper 40. The weighing hoppers 50 each temporarily receive the article and discharge the received article downstream. Control units 80 each acquire the weight value of the article received by each of the plurality of weighing hoppers 50 and select, from the plurality of weighing hoppers 50, a combination of the weighing hoppers 50 such that the total weight of the articles weighed is a predetermined weight. Specifically, the control units 80 each perform a combination weighing operation, on the basis of the weight value from a load cell 56, to be described later, included in each weighing hopper 50 (weight value of the article in each weighing hopper 50). Then, the control units 80 each select a combination of the weighing hoppers 50 such that the total weight as the result of the combination weighing operation is a predetermined weight (namely, a combination of articles having a total weight that is in a predetermined allowable range and is closest to a target value). The weighing hoppers 50 included in the selected combination discharge the articles to supply the articles to the discharge chute 60. Each discharge chute 60 discharges the articles discharged from the selected weighing hoppers 50, downstream by sliding. Thus, each discharge chute 60 supplies the articles to the timing hopper 70. Each timing hopper 70 temporarily receives the articles discharged from the discharge chute 60 and discharges the received articles downstream. Each timing hopper 70 supplies the articles to, for example, a packaging apparatus installed at the post stage of the combination weighing apparatus 1.

### (2) Detailed Configuration

The detailed configuration of the combination weighing apparatus 1 will be described with reference to Figs. 1 to 6. The distribution table 20 is a table member in a conic shape. Through the article supply chute, the distribution table 20 is supplied with articles from the cross feeder installed above the distribution table 20. The distribution table 20 vibrates, for example, due to an electromagnet not illustrated, to convey the supplied articles radially outward in a circumferentially distributing manner. The distribution table 20 supplies the articles conveyed to the outer edge to the plurality of radial feeders 30 disposed below the outer-edge side of the distribution table 20.

The plurality of radial feeders 30 is disposed annularly around the distribution table 20. Specifically, the plurality of radial feeders 30 extends radially with the distribution table 20 at the center. Each radial feeder 30 has a conveyance path for conveyance of an article from the side on which the distribution table 20 is located to the side on which the pool hopper 40 is located. Each radial feeder 30is made to vibrate such that the article supplied from the distribution table 20 is conveyed radially outward (in the direction away from the distribution table 20).

The combination weighing apparatus 1 includes the pool hoppers 40 identical in number to the radial feeders 30. The pool hoppers 40 are disposed one-to-one below the outer-edge sides of the radial feeders 30. The pool hoppers 40 each temporarily store the article supplied from the radial feeder 30 disposed above. Each pool hopper 40 includes a PH gate 42. Each PH gate 42 is provided at the lower portion of the corresponding pool hopper 40. The pool hoppers 40 each supply, in response to opening of the PH gate 42, the article in the pool hopper 40 to the weighing hopper 50 disposed below the pool hopper 40. Each PH gate 42 opened or closed when a linkage (not illustrated) is operated by a stepper motor (not illustrated). The operation of each stepper motor 44 is controlled by the corresponding control unit 80.

The combination weighing apparatus 1 includes the weighing hoppers 50 identical in number to the pool hoppers 40. The weighing hoppers 50 are disposed one-to-one below the pool hoppers 40. The weighing hoppers 50 each measure the weight of the article supplied from the pool hopper 40, namely, the weight of the article supplied from the radial feeder 30 through the pool hopper 40. Each weighing hopper 50 includes a WH gate 52. Each WH gate 52 is provided at the lower portion of the corresponding weighing hopper 50. The weighing hoppers 50 each supply, in response to opening of the WH gate 52, the article in the weighing hopper 50 to the corresponding discharge chute 60. Each WH gate 52 opened or closed when a linkage (not illustrated) is operated by a stepper motor (not illustrated). The operation of each stepper motor is controlled by the corresponding control unit 80. Each weighing hopper 50 includes a load cell (weighing unit) 56 that weighs an article retained in the weighing hopper 50. Each load cell 56 is an exemplary weighing mechanism. A weight result from each load cell 56 is transmitted as a weight signal to a multiplexer 83 in the corresponding control unit 80 through an amplifier not illustrated.

Each discharge chute 60 discharges the articles discharged from the selected weighing hoppers 50, downstream by sliding. Each discharge chute 60 gathers the articles supplied from the weighing hoppers 50 and supplies the articles to the timing hopper 70. Each discharge chute 60 has: a slide face 65 sloping toward the center in the horizontal direction X of the combination weighing apparatus 1 as downward in the vertical direction Z; and a chute outlet 66 through which an article is discharged. Each slide face 65 causes an article to slide down and is formed of the inner-wall face of the corresponding discharge chute 60. Each slide face 65 may be part of the inner-wall face of the discharge chute 60. The inner-wall face of each discharge chute 60 may include an inside inner-wall face disposed on the center side in the horizontal direction X of the combination weighing apparatus 1 and an outside inner-wall face disposed on the outside in the horizontal direction X of the combination weighing apparatus 1. Each slide face 65 may range from the upper end to the lower end of the discharge chute 60 and slope toward the center in the horizontal direction X of the combination weighing apparatus 1. Each slide face 65 may range from the position from which the inner-wall face of the discharge chute 60 starts to slope, to the lower end of the discharge chute 60 and slope toward the center in the horizontal direction X of the combination weighing apparatus 1. The outside inner-wall face may slope toward the center in the horizontal direction X of the combination weighing apparatus 1, to the lower end of the outside inner-wall face. Meanwhile, the inside inner-wall face may slope toward the center in the horizontal direction X of the combination weighing apparatus 1. The discharge chutes 60 have chute outlets 66 identical in number to the channels.

The discharge chute 60 provided in the first channel CH1 is a left discharge chute 60L corresponding to the left-half side of the discharge chute 60 in Figs. 1 and 2. The discharge chute 60 provided in the second channel CH2 is a right discharge chute 60R corresponding to the right-half side of the discharge chute 60 in Figs. 1 and 2. As illustrated in Fig. 3, according to the embodiment, the left discharge chute 60L is vertically divided into two in the middle, and the right discharge chute 60R is vertically divided into two in the middle. Due to the entirety of the discharge chutes 60, provided are four independent discharge paths (four channels). Articles are discharged from the weighing hoppers 50 on the left-half side to the left discharge chute 60L, and articles are discharged from the weighing hoppers 50 on the right-half side to the right discharge chute 60R. Then, the articles are discharged from each outlet 66 to the timing hopper 70.

Each timing hopper 70 sends the articles supplied from the discharge chute 60 to, for example, a post-stage filling and packaging apparatus. Each timing hopper 70 has an inlet 71a for supply of an article and an outlet 72a for discharge of an article. Each timing hopper 70 includes a body 71 and a gate 72. Each body 71 has an upper portion provided with the inlet 71a. Each gate 72 is provided at the lower portion of the timing hopper 70. The timing hoppers 70 each supply, in response to opening of the gate 72, the articles in the timing hopper 70 to, for example, the post-stage filling and packaging apparatus. Each gate 72 opened or closed when a linkage is operated by a stepper motor 76. The operation of each stepper motor 76 is controlled by the corresponding control unit 80.

The timing hoppers 70 are provided as a pair of timing hoppers 70. One of the pair of timing hoppers 70 is provided in the first channel CH1 and the third channel CH3 and is a left timing hopper 70L located on the left in Figs. 1 and 2. The other timing hopper 70 is provided in the second channel CH2 and the fourth channel CH4 and is a right timing hopper 70R located on the right in Figs. 1 and 2.

The timing hoppers 70 each have a slide face 75 that ranges from the inlet 71a to the outlet 72a of the timing hopper 70 and slopes outward from the center of the combination weighing apparatus 1. Each slide face 75 is formed of the inner-wall face of the corresponding timing hopper 70. Each slide face 75 is formed of the inner-wall face of the body 71. Each slide face 75 may be formed of the inner-wall face of the gate 72. Each body 71 may have the slide face 75 and the corresponding gate 72 may have the slide face 75. Each timing hopper 70 has a body central axis 71C. The body central axis 71C passes through the center of the inlet 71a and the center of the outlet 72a.

As illustrated in Fig. 3, the control unit 80 includes a central processing unit (CPU) 81 and a memory 82 including, for example, a read only memory (ROM) and a random access memory (RAM). The control unit 80 further includes a multiplexer 83, an A/D converter 84, and a digital signal processor (DSP) 85. In accordance with a command from the DSP 85, the multiplexer 83 selects a weight signal of 1 from the respective weight signals from the load cells 56, and transmits the weight signal to the A/D converter 84. The A/D converter 84 converts the weight signal received from the multiplexer 83 (analog signal) into a digital signal in accordance with a timing signal transmitted from the DSP 85, and then transmits the digital signal to the DSP 85. The DSP 85 performs filtering to the digital signal transmitted from the A/D converter 84.

The control unit 80 performs a combination weighing operation, on the basis of the weight value from each weighing hopper 50. Specifically, first, the control unit 80 calculates the weight of the article retained in each weighing hopper 50, with the signal subjected to filtering by the DSP 85. Then, the control unit 80 performs a combination weighing operation such that the total weight is in a predetermined target-weight range and is closest to a target value. Furthermore, the control unit 80 determines a combination of weighing hoppers 50, on the basis of the result of the combination weighing operation. Then, the control unit 80 controls the operation of the stepper motor of each determined weighing hopper 50 such that the WH gate 52 of each determined weighing hopper 50 opens. The control unit 80 determines whether or not any of the weighing hoppers 50 is empty. In a case where any of the weighing hoppers 50 is empty, the control unit 80 operates the stepper motor of the pool hopper 40 disposed above the weighing hopper 50 such that the PH gate 42 of the pool hopper 40 opens. The control unit 80 controls the opening and closing of the gate 72 of the timing hopper 70.

### (3) Discharge Chute and Timing Hopper

A discharge chute 60 and a timing hopper 70 according to the embodiment will be described with reference to Figs. 1 to 6. As illustrated in Fig. 6, each timing hopper 70 inclines from the vertical direction Z. According to the embodiment, the distance D1 in the horizontal direction X between a center 72ac of the outlet 72a of the timing hopper 70 in the first channel CH1 and a center 72ac of the outlet 72a of the timing hopper 70 in the second channel CH2 is longer than the distance D2 in the horizontal direction X between a center 66a of the chute outlet 66 in the first channel CH1 and a center 66a of the chute outlet 66 in the second channel CH2. Thus, because the distance D1 between the respective outlets 72a in the first channel CH1 and the second channel CH2 is longer than the distance D2 between the respective chute outlets 66 in the first channel CH1 and the second channel CH2, in a case where two packaging apparatuses are disposed in accordance with the distance between the chute outlets 66, the two packaging apparatuses can be easily disposed separately.

According to the embodiment, a slide face 65 ranges from the upper end to the lower end of the discharge chute 60 and slopes toward the center in the horizontal direction X of the combination weighing apparatus 1. In the side view of the combination weighing apparatus, the outlet 72a in the first channel CH1 and the outlet 72a in the second channel CH2 are apart from the center of the combination weighing apparatus 1. Thus, the path on which an article slides down in each discharge chute 60 is made short, so that the time required for the articles discharged from selected hoppers to reach the timing hopper 70 can be shortened. In particular, on the conveyance path from each discharge chute 60 to the corresponding timing hopper 70 in the side view of the combination weighing apparatus 1, a shorter distance as downward after switching from the direction toward the center of the combination weighing apparatus 1 to the direction away from the center of the combination weighing apparatus 1 in the horizontal direction X can prevent a reduction in the sliding speed of an article. Thus, preferably, an article slides down toward the center of the combination weighing apparatus 1 on the slide face 65 of each discharge chute 60 but slides down in the direction away from the center of the combination weighing apparatus 1 on the slide face 75 of each timing hopper 70. Although articles are gathered to the center of the combination weighing apparatus 1 by each discharge chute 60, the corresponding outlet 72a is apart from the center of the combination weighing apparatus 1, so that two packaging apparatuses can be easily disposed separately.

According to the embodiment, each timing hopper 70 has the slide face 75 that ranges from the inlet 71a to the outlet 72a of the timing hopper 70 and slopes outward from the center of the combination weighing apparatus 1. Thus, articles gathered to the center of the combination weighing apparatus 1 by each discharge chute 60 slide down along the slide face 75 in the timing hopper, so that the articles can be guided faster outside the combination weighing apparatus. The time required for the articles discharged from selected hoppers to reach the outlet of the timing hopper 70 can be shortened.

According to the embodiment, the body central axis 71C1 of the timing hopper 70 in the first channel CH1 and the body central axis 71C2 of the timing hopper 70 in the second channel CH2 cross each other. Thus, in comparison to a case where the body central axes 71C1 and 71C2 do not cross each other, the distance D1 between the respective outlets 72a in the first channel CH1 and the second channel CH2 can be lengthened, so that two packaging apparatuses can be easily disposed further separately.

### Reference Signs List

1 combination weighing apparatus
20 distribution table
30 radial feeder
40 pool hopper
50 weighing hopper
60 discharge chute
70 timing hopper
CH1 first channel
CH2 second channel
CH3 third channel
CH4 fourth channel
X horizontal direction
Z vertical direction

## Claims

1. A combination weighing apparatus (1) comprising:
a first channel (CH1) for processing of articles; and
a second channel (CH2) for processing of articles,
the first channel (CH1) and the second channel (CH2) each include:
a plurality of hoppers (50) that temporarily receives the articles and discharges the articles received, downstream;
a control unit (80) that acquires a weight value of the article received by each of the plurality of hoppers (50) and selects a combination of hoppers (50) from the plurality of hoppers (50) such that a total weight of the articles weighed is a predetermined weight;
a discharge chute (60) that discharges the articles discharged from the selected hoppers (50), downstream by sliding; and
a timing hopper (70) that temporarily receives the articles discharged from the discharge chute (60) and discharges the article received, downstream,
the discharge chute (60) has:
a slide face (65) sloping toward a center in a horizontal direction (X) of the combination weighing apparatus (1) as downward in a vertical direction (Z); and
a chute outlet (66) through which the articles are discharged,
the timing hopper (70) has an outlet (72a) through which the articles are discharged, and
**characterized in that** a distance in the horizontal direction (X) between a center of the outlet (72a) in the first channel (CH1) and a center of the outlet (72a) in the second channel (CH2) is longer than a distance in the horizontal direction (X) between a center of the chute outlet (66) in the first channel (CH1) and a center of the chute outlet (66) in the second channel (CH2).

2. The combination weighing apparatus (1) according to claim 1, **characterized in that**
the slide face (65) ranges from an upper end to a lower end of the discharge chute (60) and slopes toward the center in the horizontal direction (X) of the combination weighing apparatus (1), and
in a side view of the combination weighing apparatus (1), the outlet (72a) in the first channel (CH1) and the outlet (72a) in the second channel (CH2) are apart from the center.

3. The combination weighing apparatus (1) according to claim 1 or 2, **characterized in that**
the timing hopper (70) has a slide face (75) that ranges from an inlet (71a) to the outlet (72a) of the timing hopper (70) and slopes outward from the center in the horizontal direction (X) of the combination weighing apparatus (1).

4. The combination weighing apparatus (1) according to claim 1 or 2, **characterized in that**
a body central axis (71C) of the timing hopper (70) in the first channel (CH1) and a body central axis (71C) of the timing hopper (70) in the second channel (CH2) cross each other.

## Patentansprüche

1. Kombinationswägevorrichtung (1), die aufweist:
einen ersten Kanal (CH1) zum Verarbeiten von Artikeln; und
einen zweiten Kanal (CH2) zum Verarbeiten von Artikeln,
wobei der erste Kanal (CH1) und der zweite Kanal (CH2) jeweils aufweisen:
mehrere Trichter (50), die die Artikel vorübergehend aufnehmen und die aufgenommenen Artikel stromabwärts abgeben;
eine Steuereinheit (80), die einen Gewichtswert des von jedem der mehreren Trichtern (50) aufgenommenen Artikels erfasst und eine Kombination von Trichtern (50) aus den mehreren Trichtern (50) auswählt, so dass ein Gesamtgewicht der gewogenen Artikel ein vorbestimmtes Gewicht ist;
eine Abgaberutsche (60), die die aus den ausgewählten Trichtern (50) abgegebenen Artikel stromabwärts durch Gleiten abgibt; und
einen Timing-Trichter (70), der die von der Abgaberutsche (60) abgegebenen Artikel vorübergehend aufnimmt und den aufgenommenen Artikel stromabwärts abgibt, wobei die Abgaberutsche (60) aufweist:
eine Gleitfläche (65), die zu einer Mitte in einer horizontalen Richtung (X) der Kombinationswägevorrichtung (1) sowie in einer vertikalen Richtung (Z) nach unten geneigt ist; und
einen Rutschenauslass (66), durch den die Artikel abgegeben werden, wobei der Timing-Trichter (70) einen Auslass (72a) aufweist, durch den die Artikel abgegeben werden, und
**dadurch gekennzeichnet, dass** ein Abstand in der horizontalen Richtung (X) zwischen einer Mitte des Auslasses (72a) im ersten Kanal (CH1) und einer Mitte des Auslasses (72a) im zweiten Kanal (CH2) länger ist als ein Abstand in der horizontalen Richtung (X) zwischen einer Mitte des Rutschenauslasses (66) im ersten Kanal (CH1) und einer Mitte des Rutschenauslasses (66) im zweiten Kanal (CH2).

2. Kombinationswägevorrichtung (1) nach Anspruch 1, **dadurch gekennzeichnet, dass**
die Gleitfläche (65) von einem oberen Ende zu einem unteren Ende der Abgaberutsche (60) reicht und in horizontaler Richtung (X) der Kombinationswägevorrichtung (1) zur Mitte geneigt ist, und
in einer Seitenansicht der Kombinationswägevorrichtung (1) der Auslass (72a) im ersten Kanal (CH1) und der Auslass (72a) im zweiten Kanal (CH2) von der Mitte beabstandet sind.

3. Kombinationswägevorrichtung (1) nach Anspruch 1 oder 2, **dadurch gekennzeichnet, dass**
der Timing-Trichter (70) eine Gleitfläche (75) aufweist, die von einem Einlass (71a) zum Auslass (72a) des Timing-Trichters (70) reicht und von der Mitte aus in horizontaler Richtung (X) der Kombinationswägevorrichtung (1) nach außen geneigt ist.

4. Kombinationswägevorrichtung (1) nach Anspruch 1 oder 2, **dadurch gekennzeichnet, dass**
eine Körpermittelachse (71C) des Timing-Trichters (70) im ersten Kanal (CH1) und eine Körpermittelachse (71C) des Timing-Trichters (70) im zweiten Kanal (CH2) einander kreuzen.

## Revendications

1. Appareil de pesée par combinaison (1) comprenant :
un premier conduit (CH1) pour le traitement d'articles ; et
un deuxième conduit (CH2) pour le traitement d'articles,
le premier conduit (CH1) et le deuxième conduit (CH2) comprenant chacun :
une pluralité de trémies (50) recevant provisoirement les articles et déchargeant les articles reçus en aval ;
un module de commande (80) acquérant une valeur du poids de l'article reçu par chacune de la pluralité de trémies (50) et sélectionnant une combinaison de trémies (50) parmi la pluralité de trémies (50), de sorte qu'un poids total des articles pesés est un poids prédéterminé ;
une goulotte de décharge (60) déchargeant les articles déchargés par les trémies sélectionnées (50) en aval, en coulissant ; et
une trémie asservie (70) recevant provisoirement les articles déchargés par la goulotte de décharge (60), et déchargeant les articles reçus en aval,
la goulotte de décharge (60) possédant :
une face coulissante (65) inclinée vers un centre dans une direction horizontale (X) de l'appareil de pesée par combinaison (1) vers le bas dans une direction verticale (Z) ; et
une sortie de goulotte (66) par laquelle les articles sont déchargés,
la trémie asservie (70) possédant une sortie (72a) par laquelle les articles sont déchargés, et
**caractérisé en ce qu'**une distance dans la direction horizontale (X) entre un centre de la sortie (72a) dans le premier conduit (CH1) et un centre de la sortie (72a) dans le deuxième conduit (CH2) est plus longue qu'une distance dans la direction horizontale (X) entre un centre de la sortie de goulotte (66) dans le premier conduit (CH1) et un centre de la sortie de goulotte (66) dans le deuxième conduit (CH2).

2. Appareil de pesée par combinaison (1) selon la revendication 1, **caractérisé en ce que**
la face coulissante (65) va d'une extrémité supérieure à une extrémité inférieure de la goulotte de décharge (60), et est inclinée vers le centre dans la direction horizontale (X) de l'appareil de pesée par combinaison (1), et
dans une vue latérale de l'appareil de pesée par combinaison (1), la sortie (72a) dans le premier conduit (CH1) et la sortie (72a) dans le deuxième conduit (CH2) sont séparées du centre.

3. Appareil de pesée par combinaison (1) selon la revendication 1 ou 2, **caractérisé en ce que**
la trémie asservie (70) possède une face coulissante (75) allant d'une entrée (71a) à la sortie (72a) de la trémie asservie (70), et inclinée vers l'extérieur depuis le centre dans la direction horizontale (X) de l'appareil de pesée par combinaison (1).

4. Appareil de pesée par combinaison (1) selon la revendication 1 ou 2, **caractérisé en ce que**
un axe central du corps (71C) de la trémie asservie (70) dans le premier conduit (CH1) et un axe central du corps (71C) de la trémie asservie (70) dans le deuxième conduit (CH2) se croisent.
